# EUROPEAN PATENT SPECIFICATION

(11) **EP 1 629 584 B1**
(45) Date of publication and mention of the grant of the patent: **23.09.2015**
(21) Application number: 04730397.9
(22) Date of filing: 29.04.2004
(51) Int. Cl.: H02J 7/00

(54) **ENERGY STORAGE**
ENERGEISPEICHERUNG
STOCKAGE D'ENERGIE

(30) Priority: 22.05.2003 SE 0301507
(43) Date of publication of application: 01.03.2006
(73) Proprietor: Scania CV AB (publ), 151 87 Södertälje (SE)
(72) Inventor: LINDSTRÖM, Johan, 61137 Nyköping (SE)
(74) Representative: Scania CV AB
(86) International application number: PCT/SE2004/000657
(87) International publication number: WO 2004/105209

(56) References cited:
- US-B1- 6 275 004
- US-B1- 6 462 511

## Description

### THE BACKGROUND OF THE INVENTION AND PRIOR ART

The present invention relates generally to storage of electrical energy. More particularly the invention relates to an arrangement according to the preamble of claim 1 and a vehicle according to claim 9. The invention also relates to a method of charging a number of electrical storage modules according to the preamble of claim 10, a computer program according to claim 15 and a computer readable medium according to claim 16.

Recent technology development has placed a strong demand for efficient electrical power sources. For instance, in today's vehicular industry it is particularly important that any onboard generated electrical energy can be stored as efficiently as possible and constitute a reliable source of energy. Namely, the functionality of the modern vehicles is very dependent on electrically powered equipment. Moreover, hybrid vehicles and purely electrically propelled vehicles now begin to play an increasingly important role on the transportation market.

Therefore, highly efficient battery charging techniques are required. One example of an electrical charging system is described in the U.S. patent No. 6,215,277. Here, a control module selectively controls a charging current to one out of two batteries, which may have different output voltages. Thus, both the batteries can be charged without a DC-to-DC converter being required.

U.S. patent No. 6,462,511 discloses a pseudo-parallel charging system for charging segmented batteries, wherein a current switching device routes a charging current from a charge source to a selected battery segment while the remaining battery segments are in a relaxation mode, i.e. do not receive any charge current. Thereby, a cost-efficient solution for charging large battery packs is accomplished.

The U.S. patent No. 6,275,004 relates to an apparatus for balancing a battery module, wherein a plurality of batteries are connected in series to supply power to a vehicle. A generator voltage is here DC-to-DC converted and delivered individually to each battery in response to a measured charge condition of the specific battery. Thereby, the risk of a premature degradation of the batteries due to any imbalances in the state of charge (SOC) among the batteries may be reduced.

Hence, the prior art includes various examples of solutions for charging batteries which are advantageous with respect to different battery parameters, such as the cycle life (i.e. the number of times a battery may be recharged and discharged before it fails to meet a certain performance criterion).

However, there is yet no solution which significantly increases a battery's load capacity in respect of its usable SOC. Generally, if a voltage is fed to a battery which is equal to, or even below, the battery's nominal voltage, the battery will store an amount of energy which is less than its actual capacity. For example, a charging voltage equal to the nominal voltage may result in load capacity of 85% SOC for a standard lead-acid type of battery. By nominal voltage is here understood the output voltage which the battery is designed to deliver under normal operating conditions. Furthermore, no battery can drive a load with acceptable performance (i.e. relatively close to the nominal voltage) until it is fully discharged. Instead, the battery typically needs to be recharged when a 50%-SOC level has been reached. Consequently, if a standard battery is charged with a nominal voltage, its effective range of operation will be limited to an interval between 85% SOC and 50% SOC. Naturally, it is desirable to expand this interval and thus increase the battery's capacity.

One way to accomplish a broadening of the load-capacity interval is to supply a charging voltage which exceeds the nominal voltage, and thereby increase the upper SOC. As a general rule, the SOC increases with increasing charging voltage. However, it is far from unproblematic to elevate the charging voltage level. This may namely cause severe damage to the units which are included in the electric system being fed by the battery. For example, the service life of the light bulbs in a typical vehicle system may be reduced with up to 50% for each 0,5 Volt increase above the nominal voltage.

### SUMMARY OF THE INVENTION

The object of the present invention is therefore to provide an energy storage solution, which alleviates the problems above, and thus offers an efficient charging without increasing the risk of damaging any units that are included in the electric circuitry to which the charged storage module is coupled.

According to one aspect of the invention, the object is achieved by the arrangement for storing electrical energy as initially described, wherein the DC-to-DC converter is adapted to control each of the voltage fractions to vary over time within an interval around a respective nominal module voltage.

An important advantage attained by this arrangement is that, for each electrical storage module, the charging voltage may be temporarily increased to a level which is sufficiently high to obtain an improved load capacity (of, say 95% SOC). At the same time, the overall voltage over the electrical storage modules may be held at a nominal level, i.e. a harmless voltage with respect to any units that are included in the relevant electric circuitry.

According to one embodiment of this aspect of the invention, the interval represents a voltage variation of less than 25% of any of the nominal module voltages. This is namely sufficient to accomplish a significant improvement of the load capacity for a majority of the electrical storage modules types currently on the market. It is also important that the interval is held relatively narrow because otherwise the voltage level may become too low to maintain an adequate SOC in the modules during those periods when their voltage level is below the nominal value.

According to another embodiment of this aspect of the invention, the DC-to-DC converter is adapted to control the respective voltage fractions over the electrical storage modules, such that an average interval during which the voltage fraction exceeds the nominal module voltage is substantially equal with respect to all the modules. This is desirable because thereby all the modules obtain an equally good load capacity (provided, of course, that they have essentially the same electrochemical characteristics).

According to yet another embodiment of this aspect of the invention, the DC-to-DC converter is adapted to control the respective voltage fractions over the electrical storage modules, such that in average, an equally large fraction of the DC-system voltage is distributed to each module. Again, this is preferable from a load capacity point-of-view, at least if the modules have essentially the same electrochemical characteristics.

According to still another embodiment of this aspect of the invention, two or more of the electrical storage modules are included in a common battery unit. It is here presumed that a separate set of access points is provided for each module, and that these access points are coupled to the DC-to-DC converter, such that the modules may be charged individually. This design is advantageous, since in some applications it may be appropriate to enclose all, or at least some, of the modules in one battery unit, for example due for environmental reasons.

According to another embodiment of this aspect of the invention, the electrical storage modules are adapted to deliver energy to an electrical system of a vehicle via the first and second terminals. Naturally, this is desirable because in most vehicle applications, the storage modules will be required to deliver energy also during the normal charging procedure.

According to another aspect of the invention the object is achieved by a method of charging a number of electrical storage modules as initially described, wherein each of the voltage fractions is controlled to vary over time within an interval around a respective nominal module voltage. Thus, for each electrical storage module, the charging voltage may be temporarily increased to a level which is sufficiently high to obtain a significant improvement of the load capacity, without increasing the overall voltage to a level that may cause damages to any units that are included in the relevant electric circuitry.

According to one embodiment of this aspect of the invention, the interval represents a voltage variation of less than 25% of any of the nominal module voltages. As mentioned above, this is normally sufficient to improve the electrical storage modules' load capacity significantly in comparison with a standard nominal-voltage charging procedure.

According to another embodiment of this aspect of the invention, the respective voltage fractions over the electrical storage modules are controlled such that an average interval during which the voltage fraction exceeds the nominal module voltage is substantially equal with respect to all the modules. Namely, thereby all the modules obtain an equally good load capacity, at least if they have essentially the same electrochemical characteristics.

According to another embodiment of this aspect of the invention, the respective voltage fractions over the electrical storage modules are controlled such that, in average, an equally large fraction of the DC-system voltage is distributed to each module. As stated above, this is preferable from a load capacity point-of-view if the modules have essentially the same electrochemical characteristics.

According to a further aspect of the invention the object is achieved by a computer program directly loadable into the internal memory of a computer, comprising software for controlling the above proposed method when said program is run on a computer.

According to another aspect of the invention the object is achieved by a computer readable medium, having a program recorded thereon, where the program is to make a computer control the above proposed method.

Hence, the invention offers an excellent battery charging approach for any electrical system wherein a high load capacity is vital. The proposed solution is thereby particularly well suited for vehicle applications.

### BRIEF DESCRIPTION OF THE DRAWINGS

The present invention is now to be explained more closely by means of embodiments, which are disclosed as examples, and with reference to the attached drawings.
- Figure 1: shows a block diagram over an arrangement for storing electrical energy according to a first embodiment of the invention,
- Figure 2: shows graph for different charging voltages as functions of time according to the first embodiment of the invention,
- Figures 3a-b: show graphs specifically illustrating the charging voltages according to the first embodiment of the invention,
- Figure 4: shows a block diagram over an arrangement for storing electrical energy according to a second embodiment of the invention,
- Figure 5: shows graph for different charging voltages as functions of time according to the second embodiment of the invention,
- Figures 6a-c: show graphs specifically illustrating the charging voltages according to the second embodiment of the invention, and
- Figure 7: shows a flow diagram which illustrates the general method according to the invention.

### DESCRIPTION OF EMBODIMENTS OF THE INVENTION

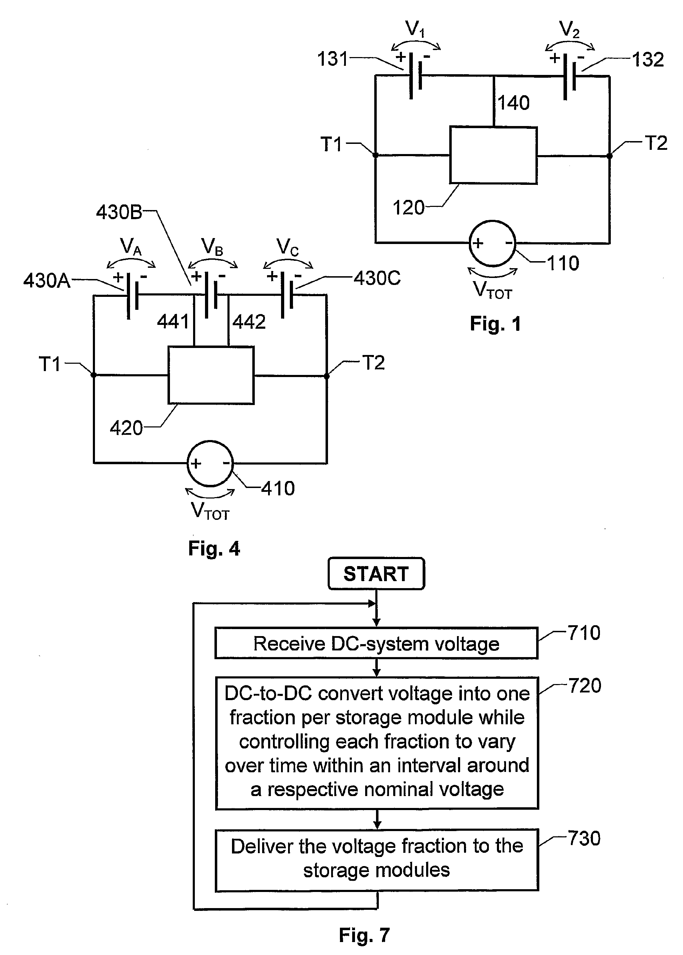

A block diagram over an arrangement for storing electrical energy according to a first embodiment of the invention is shown in figure 1. The arrangement includes an electric charge source 110, such as a DC-generator, a DC-to-DC converter 120 and first and second electrical storage modules 131 and 132 respectively, for example in the form of lead acid batteries.

The electric charge source 110 produces a DC-system voltage V_{TOT} and is connected to a first and a second terminal T1 and T2 respectively, such that the DC-system voltage V_{TOT} is applied between the first terminal T1 and the second terminal T2.

The electrical storage modules 131 and 132 are connected in series to one another with a first terminal polarity, e.g. negative, of the first module 131 coupled to a second terminal polarity, e.g. positive, of the second module 132. The first electrical storage module 131 is also connected to the first terminal T1 with a second terminal polarity, e.g. positive, and correspondingly, the second electrical storage module 132 is connected to the second terminal T2 with a first terminal polarity, e.g. negative. Thus, the DC-system voltage V_{TOT} is applied over the electrical storage modules 131 and 132.

The DC-to-DC converter 120 is coupled to both the terminals T1 and T2, and to a point between the first and second modules 131 and 132 by means of an electrical connection 140. In practice, this connection point may be identical to one of the module's 131 or 132 terminals. The DC-to-DC converter 120 receives incoming power from the electric charge source 110 via the terminals T1 and T2. The DC-to-DC converter 120 also delivers a voltage fraction V₁ and V₂ of the DC-system voltage V_{TOT} to each of the modules 131 and 132. By means of the electrical connection 140, the DC-to-DC converter 120 controls the voltage fractions V₁ and V₂, such that they vary over time. However the sum of V₁ and V₂ is always equal to the DC-system voltage V_{TOT}.

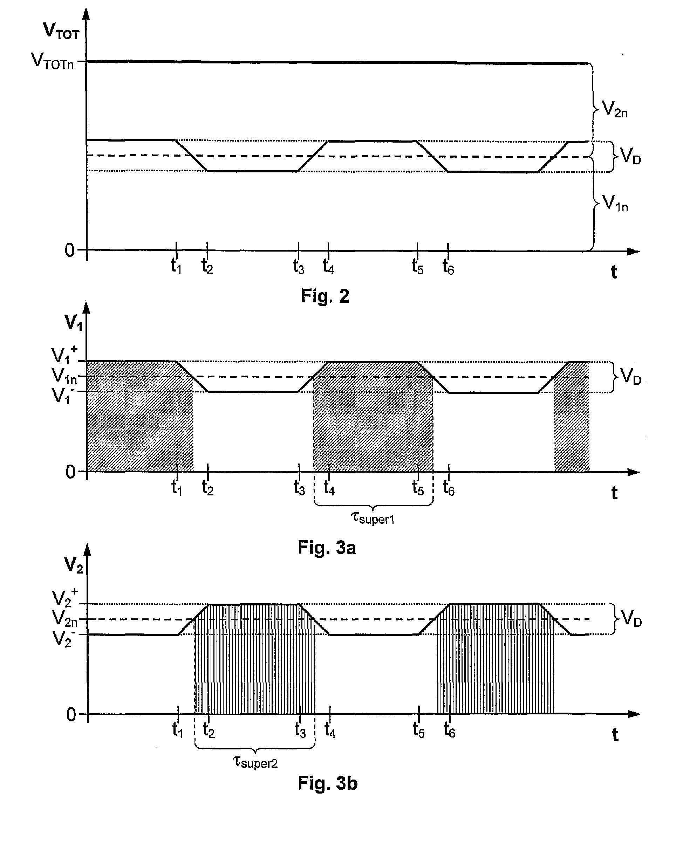

Figure 2 shows a first graph which illustrates how the voltage fractions V₁ and V₂ may be varied over time. The diagram's vertical axis indicates the DC-system voltage V_{TOT}, which here is assumed to remain essentially constant at a nominal level V_{TOTn}. Theoretically, however, the DC-system voltage V_{TOT} may vary, and in practice it often fluctuates to some degree, although a constant voltage value is generally desirable. The horizontal axis of the diagram indicates the time t.

A dashed line represents a first nominal voltage value V₁ₙ for a first voltage fraction V₁ over the first electrical storage module 131. In this example, the first nominal voltage value V₁ₙ is equal to V_{TOT}/2, however any other value is technically conceivable. Since the first nominal voltage value V₁ₙ here is V_{TOT}/2, a second nominal voltage value V₂ₙ for the second voltage fraction V₂ over the second electrical storage module 132 also becomes V_{TOT}/2.

The voltage fractions V₁ and V₂ are varied within an interval V_{D} around the respective nominal module voltage V₁ₙ and V₂ₙ. According to this embodiment of the invention, the voltage fractions V₁ and V₂ over the respective modules 131 and 132 vary over time t by periodically applying a voltage V₁ above the first nominal voltage value V₁ₙ over the first module 131 while applying a voltage V₂ below the second nominal voltage value V₂ₙ over the second module 132, and vice versa. Specifically, at a first time instance t₁ a gradual decrease of the first voltage fraction V₁ is initiated from an upper voltage level V₁₊, and at a second time instance t₂ a lower voltage level V₁₋ is reached. The difference between the upper voltage level V₁₊, and the lower voltage level V₁₋ thus represents the interval V_{D}. Preferably, the first nominal voltage value V₁ₙ corresponds to the average value of the upper voltage level V₁₊, and the lower voltage level V₁₋. Figure 3a shows a graph which illustrates the specific variation of the first voltage fraction V₁. At a third time instance t₃, a gradual increase of the first voltage fraction V₁ is initiated, and at a fourth time instance t₄, the upper voltage level V₁₊ is again reached. At yet a later time fifth time instance t₅, the first voltage fraction V₁ is lowered once more until the lower voltage level V₁₋ is reached at a sixth time instance t₆, and so on.

Consequently, during a first interval τₛᵤₚₑᵣ₁ starting between the third and fourth time instances t₃ and t₄, and ending between the fifth and sixth time instances t₅ and t₆, the first voltage fraction V₁ exceeds the first nominal module voltage V₁ₙ. The charging performed during this first interval τₛᵤₚₑᵣ₁ may thereby drive such an amount of energy into the first electrical storage module 131 that it obtains a relatively good load capacity. If, for example, the first nominal module voltage V₁ₙ is 14 Volts, and the upper voltage level V₁₊ is 15 Volts, a load capacity of 95% SOC may be accomplished.

Figure 3b shows a graph which illustrates a corresponding variation of the second voltage fraction V₂. Here, a second interval τₛᵤₚₑᵣ₂ during which the second voltage fraction V₂ exceeds the second nominal module voltage V₂ₙ starts between the first and second time instances t₁ and t₂, and ends between the third and fourth time instances t₃ and t₄. Thus, the charging performed during the second interval τₛᵤₚₑᵣ₂ may drive such an amount of energy into the second electrical storage module 132 that also this module obtains a relatively good load capacity.

A variation of the voltage fractions V₁ and V₂ between 13 Volts and 15 Volts as exemplified above, is equivalent to the interval V_{D} representing a voltage variation of 2/14 ≈ 14% of the nominal module voltages V₁ₙ and V₂ₙ (which are both 14 Volts). Such a variation is normally sufficient to ensure a first-rate load capacity of the electrical storage modules. In any case, according to one embodiment of the invention, the interval V_{D} represents a voltage variation of less than 25% of any of the nominal module voltages V₁ₙ and V₂ₙ.

Moreover, the DC-to-DC converter controls the respective voltage fractions V₁ and V₂ over the electrical storage modules 131 and 132 respectively, such that the first and second intervals τₛᵤₚₑᵣ₁ and τₛᵤₚₑᵣ₂ are approximately equal, at least on average. Thereby, both the modules 131 and 132 will have essentially the same load capacity (provided that their electrochemical characteristics are essentially the same). Nevertheless, the length of the intervals during which the voltage fractions V₁ and V₂ are temporarily constant, (e.g. between t₂ and t₃; and between t₄ and t₅ respectively) is arbitrary and may be made infinitely short (i.e. t₂ = t₃ and t₄ = t₅), such that voltage fractions V₁ and V₂ vary continuously.

Although in many applications it may be desirable to control the respective voltage fractions V₁ and V₂, such that they voltage, on average, are substantially equally large, this is not necessary from a technical point of view. On the contrary, the nominal voltage values may very well be individually different. Furthermore, the super charging intervals (e.g. τₛᵤₚₑᵣ₁ and τₛᵤₚₑᵣ₂ above) may have different extensions in time.

Figure 4 shows a block diagram over an arrangement for storing electrical energy according to a second embodiment of the invention, which elucidates these aspects of the invention. The arrangement includes an electric charge source 410, for example in the form of a DC-generator, a DC-to-DC converter 420 and first, second and third electrical storage modules 430A, 430B and 430C respectively, which may be lead acid batteries.

Also in this case, the electric charge source 410 produces a DC-system voltage V_{TOT} between a first terminal T1 and a second terminal T2. Moreover, the electrical storage modules 430A, 430B and 430C are all connected in series to one another with alternating terminal polarities. A first electrical storage module 430A is further connected to the first terminal T1 and a third electrical storage module 430C is connected to the second terminal T2. Thus, the DC-system voltage V_{TOT} is applied over all the electrical storage modules 430A, 430B and 430C.

The DC-to-DC converter 420 is electrically coupled to both the terminals T1 and T2, and to one point between each of the first, second and third modules 430A, 430B and 430C by means of respective electrical connections 441 and 442. The DC-to-DC converter 420 receives incoming power from the electric charge source 410 via the terminals T1 and T2. The DC-to-DC converter 420 also delivers a voltage fraction V_{A}, V_{B}, and V_{C} of the DC-system voltage V_{TOT} to each of the modules 430A, 430B and 430C. Via the electrical connections 441 and 442, the DC-to-DC converter 420 controls the voltage fractions V_{A}, V_{B}, and V_{C}, such that they vary over time. However the sum of V_{A}, V_{B}, and V_{C} is always equal to the DC-system voltage V_{TOT}.

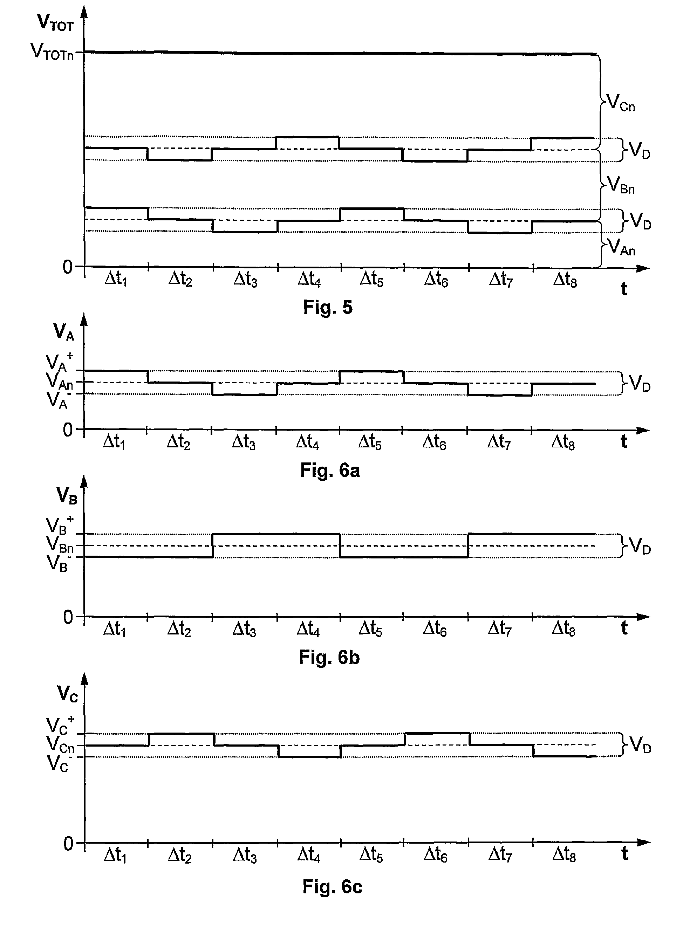

Figure 5 shows graph (corresponding to the graph in figure 2) which illustrates how the voltage fractions V_{A}, V_{B}, and V_{C} may be varied over time. As is apparent from the figure 5, a first nominal voltage value V_{An} for the first voltage fraction V_{A} over the first electrical storage module 430A is lower than a second nominal voltage value V_{Bn} for the second voltage fraction V_{B} over the second electrical storage module 430B. The second nominal voltage value V_{Bn}, in turn, is lower than a third nominal voltage value V_{Cn} for the third voltage fraction V_{C} over the third electrical storage module 430C.

Also in this example, the DC-system voltage V_{TOT} is assumed to remain essentially constant at a nominal level V_{TOTn}, while the voltage fractions V_{A}, V_{B}, and V_{C} are varied over time t. All variations, however, are held within an interval V_{D} around the respective nominal voltage value V_{An}, V_{Bn}, and V_{Cn}.

Figure 6a shows a graph which specifically illustrates how the first voltage fraction V_{A} is varied over time t. The DC-to-DC converter 420 initially controls the first voltage fraction V_{A} to a first upper voltage level V_{A}+ above the first nominal voltage value V_{An} during a first interval tΔ₁. During a subsequent second interval tΔ₂, the first voltage fraction V_{A} is controlled to the first nominal voltage value V_{An}, and during a following third interval tΔ₃, the first voltage fraction V_{A} is controlled to a first lower voltage level V_{A-} below the first nominal voltage value V_{An}. Then, during a fourth interval tΔ₄, the first voltage fraction V_{A} is again controlled to the first nominal voltage value V_{An}. The fourth interval tΔ₄, completes a full period, such that a subsequent fifth interval tΔ₅ is equivalent to the first interval tΔ₁.

Figure 6b shows a corresponding graph specifically illustrating how the second voltage fraction V_{B} is varied over time t. The DC-to-DC converter 420 here controls the second voltage fraction V_{B} to, during the first and the second intervals tΔ₁ and tΔ₂, attain a voltage value which is given by a second lower voltage level V_{B-} below the second nominal voltage value V_{Bn}. Then, during the third and the fourth intervals tΔ₃ and tΔ₄, the second voltage fraction V_{B} is controlled to a voltage value represented by a second upper voltage level V_{B+} above the second nominal voltage value V_{Bn}. A following fifth interval tΔ₅ is equivalent to the first interval tΔ₁.

Finally, figure 6c shows a graph which specifically illustrates how, in this example, the third voltage fraction V_{C} is varied over time t. During the first interval tΔ₁, the third voltage fraction V_{C} is controlled to the third nominal voltage value V_{Cn}, and during the second interval tΔ₂ it is controlled to attain a voltage value given by a third upper voltage level V_{C+} above the third nominal voltage value V_{Cn}. Subsequently, during the third interval tΔ₃, the third voltage fraction V_{C} is again controlled to the third nominal voltage value V_{Cn}, and during the fourth interval tΔ₄, the third voltage fraction V_{C} is controlled to a voltage value at a third lower voltage level V_{C-} below the third nominal voltage value V_{Cn}. In analogy with the above, these four intervals tΔ₁-tΔ₄ completes a full period, such that a following fifth interval tΔ₅ is equivalent to the first interval tΔ₁.

Thus, both the first voltage fraction V_{A} and the third voltage fraction V_{C} are varied over time t, such that they periodically attain their respective nominal voltage values V_{An} and V_{Cn}, namely during every second interval. The second voltage fraction V_{B}, however, is controlled such that it never attains its nominal voltage value V_{Bn}. It is nevertheless worth noticing that the DC-to-DC converter 420 controls all the voltage fractions V_{A}, V_{B} and V_{C} to vary within the interval V_{D} around their respective nominal voltage value V_{An}, V_{Bn} and V_{Cn}. According to one embodiment of the invention, the interval V_{D} represents a voltage variation of less than 25% of any of the nominal module voltages V_{An}, V_{Bn} and V_{Cn}.

In order to sum up, the general method of charging a number of electrical storage modules according to the invention will now be described with reference to a flow diagram in figure 7.

A first step 710 receives the DC-system voltage, for example between a first and a second terminal. A subsequent step 720, converts the DC-system voltage into one voltage fraction per module. The step 720 also varies each voltage fraction over time within an interval around the respective nominal module voltage. Finally, a step 730 delivers the relevant voltage fractions to each of the modules.

Naturally, the steps 710, 720 and 730 are actually performed continuously and in pseudo-parallel to each other, such that a DC-system voltage received in the step 710 essentially immediately is delivered to the electrical storage modules via the step 730.

All of the process steps, as well as any sub-sequence of steps, described with reference to the figure 7 above may be controlled by means of a programmed computer apparatus. Moreover, although the embodiments of the invention described above with reference to the drawings comprise computer apparatus and processes performed in computer apparatus, the invention thus also extends to computer programs, particularly computer programs on or in a carrier, adapted for putting the invention into practice. The program may be in the form of source code, object code, a code intermediate source and object code such as in partially compiled form, or in any other form suitable for use in the implementation of the process according to the invention. The carrier may be any entity or device capable of carrying the program. For example, the carrier may comprise a storage medium, such as a ROM (Read Only Memory), for example a CD (Compact Disc) or a semiconductor ROM, or a magnetic recording medium, for example a floppy disc or hard disc. Further, the carrier may be a transmissible carrier such as an electrical or optical signal which may be conveyed via electrical or optical cable or by radio or by other means. When the program is embodied in a signal which may be conveyed directly by a cable or other device or means, the carrier may be constituted by such cable or device or means. Alternatively, the carrier may be an integrated circuit in which the program is embedded, the integrated circuit being adapted for performing, or for use in the performance of, the relevant processes.

The term "comprises/comprising" when used in this specification is taken to specify the presence of stated features, integers, steps or components. However, the term does not preclude the presence or addition of one or more additional features, integers, steps or components or groups thereof.

The invention is not restricted to the described embodiments in the figures, but may be varied freely within the scope of the claims.

## Claims

1. An arrangement for storing electrical energy comprising:
an electric charge source (110; 410) adapted to produce a DC-system voltage (V_{TOT}) between a first terminal (T1) and a second terminal (T2),
a number of electrical storage modules (131, 132; 430A, 430B, 430C) connected in series between the first terminal (T1) and the second terminal (T2), and
a DC-to-DC converter (120; 420) coupled to the electric charge source (110; 410) where the DC-to-DC converter (120; 420) is electrically connected to both terminals (T1; T2) and also to one point between each pair of adjacent ones of said electrical storage modules (131, 132; 430A, 430B, 430C), the DC-to-DC converter being adapted to receive incoming power from the electric charge source (110; 410) and deliver a respective voltage fraction (V₁, V₂; V_{A}, V_{B}, V_{C}) of the DC-system voltage (V_{TOT}) to each of the modules (131, 132; 430A, 430B, 430C), wherein the DC-to-DC converter (120; 420) is adapted to control each of the voltage fractions (V₁, V₂; V_{A}, V_{B}, V_{C}) to vary over time (t) within an interval (V_{D}) around a respective nominal module voltage (V₁ₙ, V₂ₙ; V_{An}, V_{Bn}, V_{Cn}) and where the sum of said voltage fractions (V₁, V₂, V_{A}, V_{B}, V_{C}) is always equal to the DC-system voltage (V_{TOT}).

2. An arrangement according to claim 1, **characterized in that** the interval (V_{D}) represents a voltage variation of less than 25% of any of the nominal module voltages (V₁ₙ, V₂ₙ; V_{An}, V_{Bn}, V_{Cn}).

3. An arrangement according to any one of the preceding claims, **characterized in that** the DC-to-DC converter (120) is adapted to control the respective voltage fractions (V₁, V₂) over the electrical storage modules (131, 132) such that an average interval (τₛᵤₚₑᵣ₁, τₛᵤₚₑᵣ₂) during which the voltage fraction (V₁, V₂) exceeds the nominal module voltage (V₁ₙ, V₂ₙ) is substantially equal with respect to all the modules (131, 132).

4. An arrangement according to any one of the preceding claims, **characterized in that** the DC-to-DC converter (120) is adapted to control the respective voltage fractions (V₁, V₂) over the electrical storage modules (131, 132) such that an average fraction of the DC-system voltage (V_{TOT}) being distributed to each module is substantially equally large for all the modules (131, 132).

5. An arrangement according to any one of the preceding claims, **characterized in that** two or more of the electrical storage modules (131, 132; 430A, 430B, 430C) are included in a common battery unit having a separate set of access points for each module, each of the access points being coupled to the DC-to-DC converter (120; 420).

6. An arrangement according to any one of the preceding claims, **characterized in that** the number of electrical storage modules (131, 132) is equal to two.

7. An arrangement according to any one of the preceding claims, **characterized in that** the electrical storage modules (131, 132; 430A, 430B, 430C) are adapted to provide power to an electrical system of a vehicle via the first and second terminals (T1, T2).

8. An arrangement according to any one of the preceding claims, **characterized in that** the electric charge source (110; 410) is an electric generator.

9. A motor vehicle, **characterized in that** it comprises an arrangement for storing electrical energy according to any one of the claims 1 - 8.

10. A method of charging a number of electrical storage modules (131, 132; 430A, 430B, 430C) connected in series between a first terminal (T1) and a second terminal (T2), comprising the steps of:
receiving a DC-system voltage (V_{TOT}) between the first terminal (T1) and the second terminal (T2),
DC-to-DC converting the DC-system voltage (V_{TOT}) into one voltage fraction (V₁, V₂; V_{A}, V_{B}, V_{C}) per module (131, 132; 430A, 430B, 430C), and
delivering the respective voltage fraction (V₁, V₂; V_{A}, V_{B}, V_{C}) to each of the modules (131, 132; 430A, 430B, 430C), the method further comprising the step of:
controlling each of the voltage fractions (V₁, V₂; V_{A}, V_{B}, V_{C}) to vary over time (t) within an interval (V_{D}) around a respective nominal module voltage (V₁ₙ, V₂ₙ; V_{An}, V_{Bn}, V_{Cn}) wherein the said steps are performed continuously and in pseudo-parallel to each other, and wherein the voltage fractions are controlled so that their sum is always equal to the DC-system voltage.

11. A method according to claim 10, **characterized by** the interval (V_{D}) representing a voltage variation of less than 25% of any of the nominal module voltages (V₁ₙ, V₂ₙ; V_{An}, V_{Bn}, V_{Cn}).

12. A method according to any one of the claims 10 or 11, **characterized by** controlling the respective voltage fractions (V₁, V₂) over the electrical storage modules (131, 132) such that an average interval (τₛᵤₚₑᵣ₁, τₛᵤₚₑᵣ₂) during which the voltage fraction (V₁, V₂) exceeds the nominal module voltage (V₁ₙ, V₂ₙ) is substantially equal with respect to all the modules (131, 132).

13. A method according to any one of the claims 10 - 12, **characterized by** controlling the respective voltage fractions (V₁, V₂) over the electrical storage modules (131, 132) such that an average fraction of the DC-system voltage (V_{TOT}) being distributed to each module is substantially equally large for all the modules (131, 132).

14. A method according to any one of the claims 10 - 13, **characterized by** the number of electrical storage modules (131, 132) being equal to two.

15. A computer program directly loadable into the internal memory of a computer, comprising software for controlling the steps of any of the claims 10 - 14 when said program is run on the computer.

16. A computer readable medium, having a program recorded thereon, where the program is to make a computer control the steps of any of the claims 10 - 14.

## Patentansprüche

1. Anordnung zum Speichern elektrischer Energie, umfassend:
eine elektrische Ladungsquelle (110; 410), welche zum Erzeugen einer DC-Systemspannung (V_{TOT}) zwischen einem ersten Anschluss (T1) und einem zweiten Anschluss (T2) eingerichtet ist,
eine Mehrzahl elektrischer Speichermodule (131, 132; 430A, 430B, 430C), welche zwischen dem ersten Anschluss (T1) und dem zweiten Anschluss (T2) in Reihe geschaltet sind, und
einen DC-DC-Wandler (120; 420), welcher mit der elektrischen Ladungsquelle (110; 410) gekoppelt ist, wobei der DC-DC-Wandler (120; 420) elektrisch mit beiden Anschlüssen (T1; T2) und auch mit einem Bereich zwischen jedem Paar hintereinanderliegender elektrischer Speichermodule (131, 132; 430A, 430B, 430C) verbunden ist, wobei der DC-DC-Wandler eingerichtet ist, von der elektrischen Ladungsquelle (110; 410) eine eingehende Leistung zu empfangen und an jedes der Module (131, 132; 430A, 430B, 430C) einen jeweiligen Spannungsbruchteil (V₁, V₂; V_{A}, V_{B}, Vc) der DC-Systemspannung (V_{TOT}) abzugeben, wobei
der DC-DC-Wandler (120; 420) eingerichtet ist zum Steuern jedes der Spannungsbruchteile (V₁, V₂; V_{A}, V_{B}, Vc) derart, dass sich die Spannungsbruchteile über eine Zeit (t) innerhalb eines Intervalls (V_{D}) um eine jeweilige Soll-Modulspannung (V₁ₙ, V₂ₙ; V_{An}, V_{Bn}, V_{Cn}) herum ändern, und wobei die Summe der Spannungsbruchteile (V₁, V₂; V_{A}, V_{B}, V_{C}) immer gleich der DC-Systemspannung (V_{TOT}) ist.

2. Anordnung nach Anspruch 1, **dadurch gekennzeichnet, dass** das Intervall (V_{D}) eine Spannungsänderung von weniger als 25% jeder der Soll-Modulspannungen (V₁ₙ, V₂ₙ; V_{An}, V_{Bn}, V_{Cn}) darstellt.

3. Anordnung nach einem der vorangehenden Ansprüche, **dadurch gekennzeichnet, dass** der DC-DC-Wandler (120) eingerichtet ist, die jeweiligen Spannungsbruchteile (V₁, V₂) über den elektrischen Speichermodulen (131, 132) derart zu steuern, dass ein Durchschnittsintervall (τₛᵤₚₑᵣ₁, τₛᵤₚₑᵣ₂), während welchem der Spannungsbruchteil (V₁, V₂) die Soll-Modulspannung (V₁ₙ, V₂ₙ) überschreitet, im Wesentlichen bezüglich aller Module (131, 132) gleich ist.

4. Anordnung nach einem der vorangehenden Ansprüche, **dadurch gekennzeichnet, dass** der DC-DC-Wandler (120) eingerichtet ist, die jeweiligen Spannungsbruchteile (V₁, V₂) über den elektrischen Speichermodulen (131, 132) derart zu steuern, dass ein Durchschnittsbruchteil der DC-Systemspannung (V_{TOT}), welche auf jedes Modul verteilt wird, im Wesentlichen für alle Module (131, 132) gleich groß ist.

5. Anordnung nach einem der vorangehenden Ansprüche, **dadurch gekennzeichnet, dass** zwei oder mehr der elektrischen Speichermodule (131, 132; 430A, 430B, 430C) in einer gemeinsamen Batterieeinheit vorgesehen sind, welche einen getrennten Satz von Zugangspunkten für jedes Modul aufweist, wobei jeder der Zugangspunkte mit dem DC-DC-Wandler (120; 420) gekoppelt ist.

6. Anordnung nach einem der vorangehenden Ansprüche, **dadurch gekennzeichnet, dass** die Mehrzahl elektrischer Speichermodule (131, 132) gleich zwei ist.

7. Anordnung nach einem der vorangehenden Ansprüche, **dadurch gekennzeichnet, dass** die elektrischen Speichermodule (131, 132; 430A, 430B, 430C) eingerichtet sind, einem elektrischen System eines Fahrzeugs über den ersten und den zweiten Anschluss (T1, T2) Leistung bereitzustellen.

8. Anordnung nach einem der vorangehenden Ansprüche, **dadurch gekennzeichnet, dass** die elektrische Ladungsquelle (110; 410) ein elektrischer Generator ist.

9. Kraftfahrzeug, **dadurch gekennzeichnet, dass** es eine Anordnung zum Speichern elektrischer Energie nach einem der Ansprüche 1 - 8 umfasst.

10. Verfahren zum Laden einer Mehrzahl elektrischer Speichermodule (131, 132; 430A, 430B, 430C), welche zwischen einem ersten Anschluss (T1) und einem zweiten Anschluss (T2) in Reihe geschaltet sind, umfassend die Schritte:
Empfangen einer DC-Systemspannung (V_{TOT}) zwischen dem ersten Anschluss (T1) und dem zweiten Anschluss (T2),
DC-DC-Wandeln der DC-Systemspannung (V_{TOT}) in einen Spannungsbruchteil (V₁, V₂; V_{A}, V_{B}, V_{C}) pro Modul (131, 132; 430A, 430B, 430C), und
Abgeben des jeweiligen Spannungsbruchteils (V₁, V₂; V_{A}, V_{B}, V_{C}) an jedes der Module (131, 132; 430A, 430B, 430C),
wobei das Verfahren ferner die Schritte umfasst:
Steuern jedes der Spannungsbruchteile (V₁, V₂; V_{A}, V_{B}, V_{C}) derart, dass sich die Spannungsbruchteile über eine Zeit (t) innerhalb eines Intervalls (V_{D}) um eine jeweilige Soll-Modulspannung (V₁ₙ, V₂ₙ; V_{An}, V_{Bn}, V_{Cn}) herum ändern, wobei die Schritte fortlaufend und pseudo-parallel zueinander durchgeführt werden, und wobei die Spannungsbruchteile derart gesteuert werden, dass ihre Summe immer gleich der DC-Systemspannung ist.

11. Verfahren nach Anspruch 10, **dadurch gekennzeichnet, dass** das Intervall (V_{D}) eine Spannungsänderung von weniger als 25% jeder der Soll-Modulspannungen (V₁ₙ, V₂ₙ; V_{An}, V_{Bn}, V_{Cn}) darstellt.

12. Verfahren nach einem der Ansprüche 10 oder 11, **gekennzeichnet durch** ein Steuern der jeweiligen Spannungsbruchteile (V₁, V₂) über den elektrischen Speichermodulen (131, 132) derart, dass ein Durchschnittsintervall (τₛᵤₚₑᵣ₁, τₛᵤₚₑᵣ₂), während welchem der Spannungsbruchteil (V₁, V₂) die Soll-Modulspannung (V₁ₙ, V₂ₙ) überschreitet, im Wesentlichen bezüglich aller Module (131, 132) gleich ist.

13. Verfahren nach einem der Ansprüche 10 - 12, **gekennzeichnet durch** ein Steuern der jeweiligen Spannungsbruchteile (V₁, V₂) über den elektrischen Speichermodulen (131, 132) derart, dass ein Durchschnittsbruchteil der DC-Systemspannung (V_{TOT}), welche auf jedes Modul verteilt wird, im Wesentlichen für alle Module (131, 132) gleich groß ist.

14. Verfahren nach einem der Ansprüche 10 - 13, **dadurch gekennzeichnet, dass** die Mehrzahl elektrischer Speichermodule (131, 132) gleich zwei ist.

15. Computerprogramm, welches direkt in den internen Speicher eines Computers ladbar ist, umfassend Software zum Steuern der Schritte nach einem der Ansprüche 10 - 14, wenn das Programm auf den Computer abläuft.

16. Computer-lesbares Medium, worauf ein Programm gespeichert ist, wobei das Programm einen Computer veranlasst, die Schritte nach einem der Ansprüche 10 - 14 zu steuern.

## Revendications

1. Agencement pour stocker de l'énergie électrique, comprenant :
une source de charge électrique (110 ; 410) adaptée pour produire une tension continue de système (V_{TOT}) entre une première borne (T1) et une seconde borne (T2),
une pluralité de modules de stockage électriques (131, 132 ; 430A, 430B, 430C) connectés en série entre la première borne (T1) et la seconde borne (T2), et
un convertisseur DC-DC (12 ; 420) connecté à la source de charge électrique (110 ; 410), où le convertisseur DC-DC (120 ; 420) est connecté électriquement aux deux bornes (T1, T2) et également à un point entre chaque paire de modules de stockage électriques adjacents desdits modules de stockage électriques (131, 132 ; 430A, 430B, 430C),
le convertisseur DC-DC étant adapté pour recevoir de l'énergie arrivant de la source de charge électrique (110 ; 410) et pour livrer une fraction de tension correspondante (V₁, V₂; V_{A}, V_{B}, V_{C}) de la tension continue de système (V_{TOT)} à chacun des modules (131, 132 ; 430A, 430B, 430C),
le convertisseur DC-DC (120 ; 420) étant adapté pour régler chacune des fractions de tension (V₁, V₂; V_{A}, V_{B}, V_{C}) à varier en fonction du temps (t) dans un intervalle (V_{D}) autour d'une tension nominale correspondante de module (V₁ₙ, V₂ₙ; V_{An}, V_{Bn}, V_{Cn}), et où la somme des fractions de tension (V₁, V₂; V_{A}, V_{B}, V_{C}) est toujours égale à la tension continue de système (V_{TOT}).

2. Agencement selon la revendication 1, **caractérisé en ce que** l'intervalle (V_{D}) représente une variation de tension de moins de 25% de l'une quelconque des tensions nominales de module (V₁ₙ, V₂ₙ; V_{An}, Vₐₙ, V_{Cn}).

3. Agencement selon l'une quelconque des revendications précédentes, **caractérisé en ce que** le convertisseur DC-DC (120) est adapté pour régler les fractions de tension correspondantes (V₁, V₂) sur les modules de stockage électriques (131, 132) de façon qu'un intervalle moyen (τₛᵤₚₑᵣ₁, τₛᵤₚₑᵣ₂) pendant lequel la fraction de tension (V₁, V₂) dépasse la tension nominale de module (V₁ₙ, V₂ₙ) est essentiellement le même pour tous les modules (131, 132).

4. Agencement selon l'une quelconque des revendications précédentes, **caractérisé en ce que** le convertisseur DC-DC (120) est adapté pour régler les fractions de tension respectives (V₁, V₂) sur les modules de stockage électriques (131, 132) de façon qu'une fraction moyenne de tension continue de système (V_{TOT}) fournie à chaque module est essentiellement la même pour chacun des modules (131, 132).

5. Agencement selon l'une quelconque des revendications précédentes, **caractérisé en ce que** deux ou davantage de modules de stockage électrique (131, 132 ; 430A, 430B, 430C) sont compris dans une unité de batterie commune ayant des ensembles séparés de points d'accès pour chaque module, chacun des points d'accès étant connecté au convertisseur DC-DC (120 ; 420).

6. Agencement selon l'une quelconque des revendications précédentes, **caractérisé en ce que** le nombre de modules de charge électriques (131, 132) est égal à deux.

7. Agencement selon l'une quelconque des revendications précédentes, **caractérisé en ce que** les modules de stockage électrique (131, 132 ; 430A, 430B, 430C) sont adaptés pour fournir de l'énergie à un système électrique d'un véhicule via les première et seconde bornes (T1, T2).

8. Agencement selon l'une quelconque des revendications précédentes, **caractérisé en ce que** la source de charge électrique (110 ; 410) est un générateur électrique.

9. Véhicule à moteur, **caractérisé en ce qu'**il comprend un agencement selon l'une quelconque des revendications 1 à 8.

10. Procédé pour charger une pluralité de modules de stockage électriques (131, 132 ; 430A, 430B, 430C) connectés en série entre une première borne (T1) et une seconde borne (T2), comprenant les étapes de :
recevoir une tension continue de système (V_{TOT}) entre la première borne (T1) et la seconde borne (T2),
convertir en DC-DC la tension continue de système (V_{TOT}) en une fraction de tension (V₁, V₂ ; V_{A}, V_{B}, V_{C}) par module (131, 132 ; 430A, 430B, 430C), et livrer la fraction de tension correspondante (V₁, V₂; V_{A}, V_{B}, V_{C}) à chacun des modules (131, 132 ; 430A, 430B, 430C),
le procédé comprenant en outre l'étape de :
régler chacune des fractions de tension (V₁, V₂; V_{A}, V_{B}, V_{C}) à varier en fonction du temps (t) dans un intervalle (V_{D}) autour d'une tension nominale correspondante de module (V₁ₙ, V₂ₙ; V_{An}, V_{Bn}, V_{Cn}), où lesdites étapes sont mises en oeuvre de manière continue et en pseudo-parallèle les unes aux autres, et où les fractions de tension sont réglées de façon que leur somme soit toujours égale à la tension continue de système.

11. Procédé selon la revendication 10, **caractérisé en ce que** l'intervalle (V_{D}) représente une variation de tension de moins de 25% de l'une quelconque des tensions nominales de module (V₁ₙ, V₂ₙ; V_{An}, V_{Bn}, V_{Cn}).

12. Procédé selon la revendication 10 ou 11, **caractérisé par** régler les fractions de tension correspondantes (V₁, V₂) sur les modules de stockage électriques (131, 132) de façon qu'un intervalle moyen (τₛᵤₚₑᵣ₁, τₛᵤₚₑᵣ₂) pendant lequel la fraction de tension (V₁, V₂) dépasse la tension nominale de module (V₁ₙ, V₂ₙ) est essentiellement le même pour tous les modules (131, 132).

13. Procédé selon l'une quelconque des revendications 10 à 12, **caractérisé par** régler les fractions de tension respectives (V₁, V₂) sur les modules de stockage électriques (131, 132) de façon qu'une fraction moyenne de tension continue de système (V_{TOT}) fournie à chaque module est essentiellement la même pour chacun des modules (131, 132).

14. Procédé selon l'une quelconque des revendications 10 à 13, **caractérisé par le fait que** le nombre de modules de charge électriques (131, 132) est égal à deux.

15. Programme d'ordinateur à charger directement dans la mémoire interne d'un ordinateur, comprenant un logiciel pour commander les étapes de l'une quelconque des revendications 10 à 14 lorsque ledit programme est mis en oeuvre sur l'ordinateur.

16. Moyen lisible sur un ordinateur, ayant un programme enregistré là-dessus, le programme ayant à faire un ordinateur commander les étapes de l'une quelconque des revendications 10 à 14.
